Europäisches Patentamt

European Patent Office

Office européen des brevets

(19)

(11) Veröffentlichungsnummer: **0 319 032**
**A2**

(12) **EUROPÄISCHE PATENTANMELDUNG**

(21) Anmeldenummer: **88120167.7**

(22) Anmeldetag: **02.12.88**

(51) Int. Cl.⁴: **B23Q 7/04 , B27C 9/04**

(30) Priorität: **04.12.87 DE 3741171**

(43) Veröffentlichungstag der Anmeldung:
**07.06.89 Patentblatt 89/23**

(84) Benannte Vertragsstaaten:
**AT BE CH DE ES FR GB GR IT LI LU NL SE**

(71) Anmelder: **Kühl, Hans**
**Kornbergweg 12**
**D-7310 Plochingen(DE)**

(72) Erfinder: **Kühl, Hans**
**Kornbergweg 12**
**D-7310 Plochingen(DE)**

(74) Vertreter: **Patentanwälte Deufel- Schön-**
**Hertel- Lewald- Otto**
**Isartorplatz 6**
**D-8000 München 2(DE)**

(54) **Zimmerei-Abbundanlage.**

(57) Es wird eine Zimmerei-Abbundanlage mit mehreren Bearbeitungsaggregaten (10, 12, 14, 16) beschrieben, die entlang einer Förderbahn (18) zwischen einer Balkenaufgabeeinrichtung (72) und einer Balkenentnahmeeinrichtung (74) hintereinander angeordnet sind. Die Abbundanlage umfaßt weiterhin zwei Wendeeinheiten (26) sowie Meßtaster zur Bestimmung der Längenabmessung und eine Querschnittsmeßeinrichtung zur Bestimmung der Querschnittsmaße der zu bearbeitenden Werkstücke. Die Werkstücke werden von einer Vorschubeinrichtung (20) auf der Förderbahn (18) zu den einzelnen Bearbeitungsaggregaten und entlang diesen zur genauen Positionierung nach Maßgabe der Längsposition der an den Werkstücken vorzunehmenden Bearbeitung hin- und herbewegt.

Fig. 1

## Zimmerei-Abbundanlage

Die Erfindung betrifft eine Abbundanlage mit wenigstens einem Bearbeitungsaggregat, einer Förderbahn und einer Vorschubeinrichtung zum Fördern eines zu bearbeitenden Bauholz-Werkstükkes. Eine solche Abbundanlage ist aus der DE-PS 34 20 080 bekannt.

In derartigen Bearbeitungsanlagen werden Bretter oder Kanthölzer in vielfältiger Weise bearbeitet, um Ablängschnitte, Zuschnitte, Schrägschnitte, Schifterschnitte, d.h. mit räumlicher Schwenkung hergestellte Schnitte, unterschiedlich ausgerichtete Kerben, Rechteckfräsungen, Überblattungen sowie Viert- und Winkelschnitte, Blockhausfräsungen, Gerberpfetten-Stöße, Schlitze, Zapfenschneidungen, Profilfräsungen, oder dergleichen auszuführen.

Häufig werden die zu bearbeitenden Bretter oder Kanthölzer nach einer groben Vorbearbeitung angeliefert, an denen dann die vorgenannten Bearbeitungen mit genauer Maßhaltung auszuführen sind. Insbesondere in Verbindung mit dem Ingenieur-Holzbau, wie er z.B bei Tennishallen anzutreffen ist, sind die Anforderungen an die Maßgenauigkeiten besonders hoch, da eine genaue Kräfte- und Momentenverteilung gemäß exakten vorhergehenden Berechnungen im Bauwerk gewährleistet sein muß. Außerdem ist z.B. im Ingenieur-Holzbau eine hohe Maßgenauigkeit erforderlich, wenn die Kanthölzer in Schichtbauweise mit untereinander verleimten Schichten verwendet werden.

Bei den bisher bekannten Abbundanlagen treten noch vielfältige Schwierigkeiten auf. Beispielsweise ist die Handhabung schwergewichtigerer Kanthölzer oft nicht einfach, insbesondere wenn eine mehrseitige Bearbeitung erforderlich ist, die entweder Wendevorgänge während der Bearbeitung oder mehrseitig einsetzbare Bearbeitungsaggregate erfordert, die um ein mehrfaches kostenaufwendiger sind als einseitig einsetzbare Bearbeitungsaggregate.

Überdies werden üblicherweise angelieferte Bretter oder Kanthölzer in ihrem Querschnitt nur so weit reduziert, wie es für die erforderliche maßgenaue Bearbeitung erforderlich ist. Es ist somit die Regel, daß die einzelnen Bretter oder Kanthölzer unterschiedliche Querschnittsmaße aufweisen, die zwischen einer minimalen und einer maximalen Grenze schwanken können. Bei den bekannten Abbundanlagen werden solche Werkstücke im Verhältnis zu einem seitlichen Anschlag geführt und auf der dem Anschlag gegenüber liegenden Seite bearbeitet. Es ist somit praktisch bei solchen bekannten Abbundanlagen nicht möglich, eine in Bezug auf die Längsmittelachse der Werkstücke mittengenaue Bearbeitung auszuführen.

Aufgabe der Erfindung ist es, eine Zimmerei-Abbundanlage der eingangs genannten Art vorzuschlagen, mit der die vielfältigen, vorstehend genannten Bearbeitungsarten in Verbindung mit geringerem Kräfteeinsatz auf einfachere Weise ausgeführt werden können, wobei insbesondere eine in Bezug auf die Mittellängsachse der Werkstücke mittengenaue Bearbeitung gewährleistet ist.

Die erfindungsgemäße Lösung dieser Aufgabe sowie vorteilhafte Weiterbildungen von dieser ergeben sich aus den Merkmalen der Patentansprüche.

Die Erfindung wird im folgenden anhand der Zeichnung beispielsweise beschrieben; in dieser zeigt:

Fig. 1 schematisch im oberen Teil eine Seienansicht und im unteren Teil eine Draufsicht einer Zimmerei-Abbundanlage mit mehreren, hintereinander angeordneten Bearbeitungsaggregaten;

Fig. 2a eine erfindungsgemäße Wendeeinheit mit gegriffenem Werkstück;

Fig. 2b die Wendeeinheit gemäß Fig. 2a nach dem Wenden des Werkstückes;

Fig. 3 eine erfindungsgemäße Wende-Greifeinrichtung gemäß einer anderen Ausführungsform; .

Fig. 4a und 4b eine andere Ausführungsform einer erfindungsgemäßen Wende-Greifeinrichtung in zwei um 90° versetzten Betriebsstellungen;

Fig.5 eine schematische Seitenansicht eines Teils der Abbundanlage im Bereich der Kreissägeneinrichtung, in welchem eine erfindungsgemäße Längenmeßeinrichtung angeordnet ist;

Fig.6 eine Schnittansicht einer Querschnittsmeßeinrichtung;

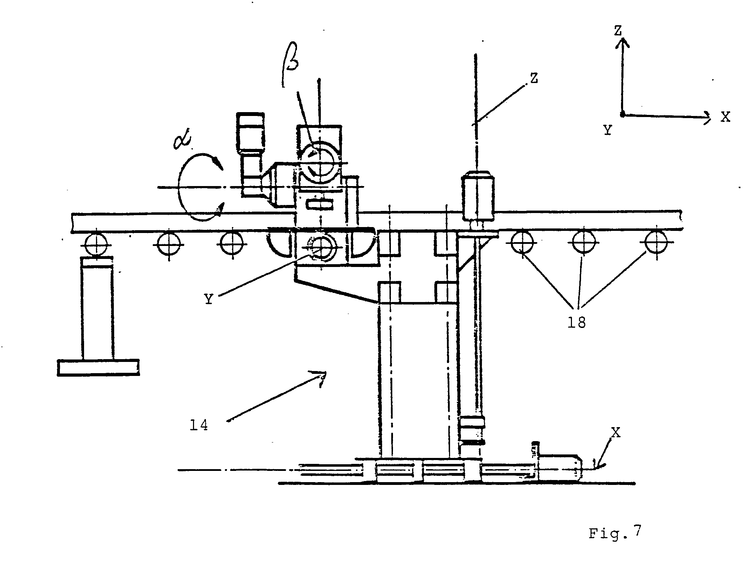

Fig.7 einen schematischen Längsschnitt einer Universalfräseinrichtung; und

Fig.8 eine sehr schematische Ansicht einer einseitig arbeitenden Hobeleinrichtung mit einer Anpreßeinrichtung.

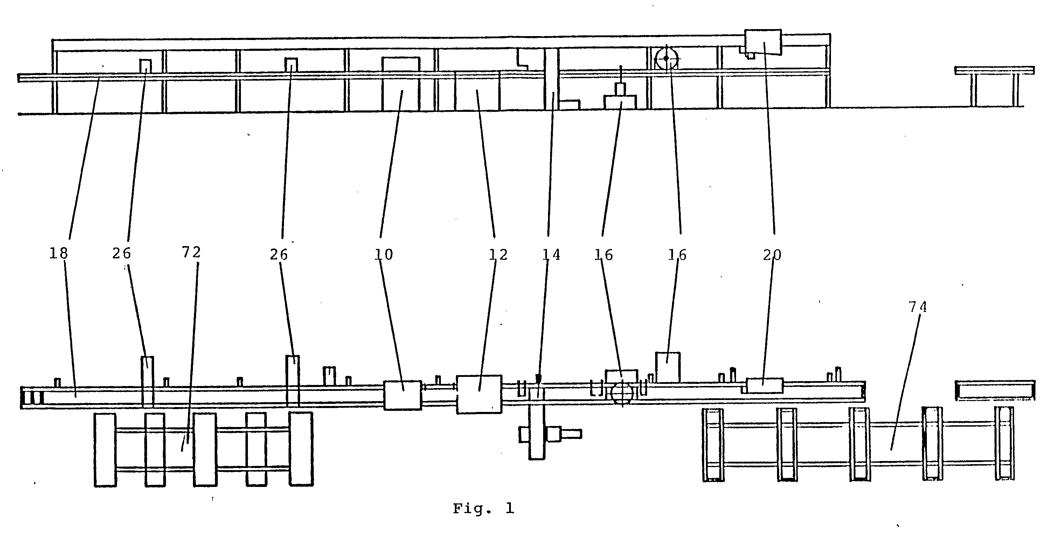

Fig. 1 zeigt eine Zimmerei-Abbundanlage, die an ihrem linken Ende eine Balkenaufgabeeinrichtung 72 und an ihrem rechten Ende eine Balkenentnahmeeinrichtung 74 umfaßt, zwischen denen sich eine Förderbahn 18, z.b. in Form einer Rollenbahn erstreckt. Oberhalb der Rollenbahn 18 ist eine Vorschubeinrichtung 20 parallel zu dieser geführt, mit der ein zu bearbeitendes Werkstück in genau bestimmter Position ergriffen und auf der Rollenbahn entlang den Bearbeitungsaggregaten geführt werden kann. Es sind eine Hobeleinrichtung 10, Kreissägeneinrichtung 12, Universaleinrichtung 14 und zwei rechtwinklig zueinander versetzte Bohreinrichtungen 16 entlang der Förderbahn 18 hintereinander angeordnet. Außerdem umfaßt die in Fig. 1 dargestellte Abbundanlage zwei Wendeeinheiten 26, die im Bereich der Balkenaufgabeeinrichtung 72 angeordnet sind.

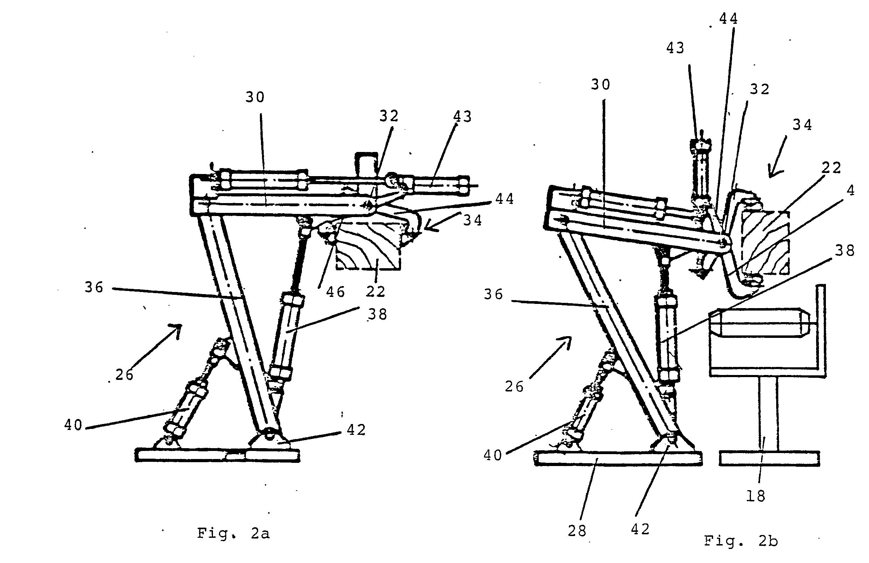

In den Fig. 2a und 2b ist eine bevorzugte Ausführungsform der in Fig. 1 gezeigten Wendeeinheiten dargestellt. Die dargestellte Wendeeinheit 26 ist als Gelenkvieleck ausgebildet. Ein erster Hauptlenker 28 des Gelenkvieleckes ist als Bestandteil eines Standgestells vorgesehen und in Bodennähe angeordnet. Ein zweiter, diesem gegenüber liegender Hauptlenker 30 trägt an seinem freien Ende ein Zangengelenk 32 einer Greifzange 34 und ist an seinem anderen Ende an einen Verbindungslenker 36 angelenkt, der seinerseits an seinem anderen Ende an dem ersten Hauptlenker 28 angelenkt ist und die beiden Hauptlenker auf Abstand voneinander hält. Außerdem ist ein erster, längenverstellbarer Antriebslenker 38 endseitig an jedem der beiden Hauptlenker 28, 30 angelenkt, so daß er zusammen mit dem Verbindungslenker 36 und dem zweiten Hauptlenker 30 ein Gelenkdreieck bildet, welches er zur Förderbahn 18 hin abschließt, und er ist am zweiten Hauptlenker 30 im Bereich der Greifzange 34 als Stütze angelenkt.

Außerdem ist ein zweiter Antriebslenker 40 vorgesehen, der einerseits an dem ersten Hauptlenker 28 in Bodennähe mit Abstand von dessen Gelenkverbindung 42 mit dem Verbindungslenker 36 und andererseits an dem Verbindungslenker 36 etwas unterhalb von dessen Mitte angelenkt ist.

Die Wendeeinheit 26 umfaßt weiterhin eine längenverstellbare Klemmeinrichtung 43, die zwischen Hebelarmen 44, 46 der Greifzange 34 angeordnet und an jedem der Hebelarme 44, 46 angelenkt ist. Außerdem umfaßt die Wendeeinheit 26 eine längenverstellbare Schwenkeinrichtung 48, die parallel zum zweiten Hauptlenker 30 oberhalb von diesem ausgerichtet angeordnet und einerseits an einem Hebelarm 44 der Hebelarme 44, 46 der Greifzange 34 und andererseits an dem Hauptlenker 30 angelenkt ist.

Der Funktionsablauf der in den Fig. 2a und 2b gezeigten Wendeeinheit ist aus den Darstellungen unmittelbar erkennbar. Hier sei darauf hingewiesen, daß es die gezeigte Anordnung der einzelnen Lenker zueinander auf besonders einfache Weise ermöglicht, ein ergriffenes Werkstück 22 nach dem Abheben von der Förderbahn 18 unter Einhaltung seiner Längsposition und Querposition in Bezug auf die Förderbahn 18 um 90° zu wenden und auf der Förderbahn 18 positionsgenau wieder abzulegen.

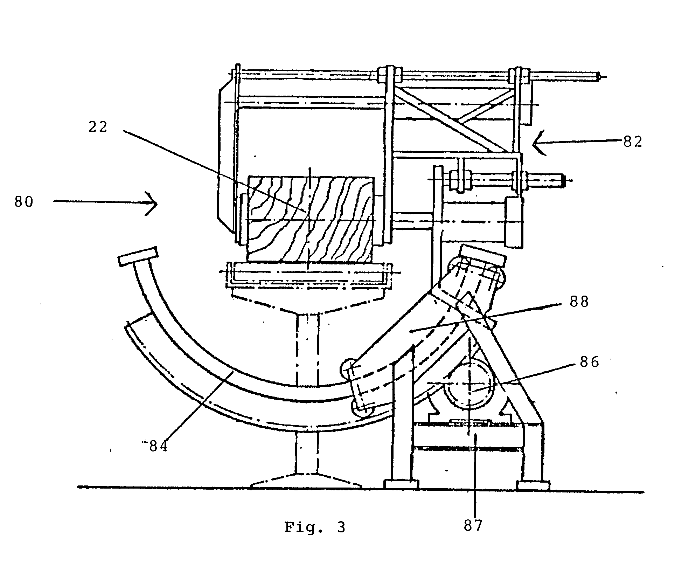

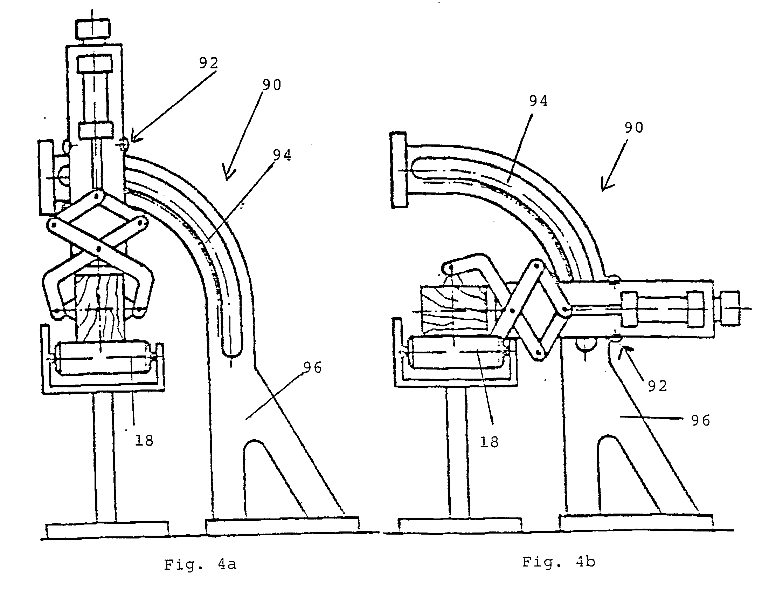

Die Fig. 3, 4a und 4b zeigen zwei andere Ausführungsformen einer Wende-Greifeinrichtung 80 bzw. 90, die eine Spannzangeneinrichtung 82, 92 umfaßt. Die Spannzangeneinrichtung 82 bzw. 92 wirkt mit einem kreisbogenförmig ausgebildeten Führungssegment 84 bzw. 94 zusammen, so daß die Spannzangeneinrichtung 82 bzw. 92 mit einem ergriffenen Werkstück um 90° von der Horizontalen in die Vertikale verschwenkt werden kann. In der horizontalen Ausrichtung ist die Spannzangeneinrichtung 82 bzw. 92 mit eingespanntem Werkstück 22 um wenigstens die Hälfte der Breite des Werkstückes 22 seitlich zum Führungssegment 84 bzw. 94 hin verfahrbar. Hierdurch wird die gegenüber liegende Kante des Werkstückes bis zu seiner ursprünglichen Mittelebene verschoben. Wenn nunmehr die Spannzangeneinrichtung 82 bzw. 92 in die vertikale Ausrichtung verschwenkt wird, wird das Werkstück 22 praktisch um seine gegenüberliegende untere Kante als Drehachse geschwenkt, so daß die Förderbahn 18 die Schwenkbewegung nicht behindert.

Bei der in Fig. 3 dargestellten Ausführungsform der Wende-Greifeinrichtung 80 ist das Führungssegment in Form eines Zahnstangensegmentes 84 ausgebildet, an einem Ende von dem die Spannzangeneinrichtung 82 befestigt ist. Das Zahnstangensegment 84 wird mittels eines ein Antriebsritzel aufweisenden Ritzelantriebs 86 durch eine von einem Stützgestell 87 getragene Rollenführung 88 auf einer Kreisbahn geführt angetrieben. Der Aufbau und die Funktionsablauf der Spannzangeneinrichtung 82 wird hier nicht näher beschrieben, da sie aus der Darstellung unmittelbar erkennbar sind.

Bei der in den Fig. 4a und 4b gezeigten Wende-Greifeinrichtung 90 umfaßt das Führungssegment eine von einer Stütze 96 getragene kreisbogenförmige Schlitzführung 94, in der die Spannzangeneinrichtung 92 während der Schwenkbewegung entlang der Kreisbahn radial ausgerichtet gehalten wird. Der Aufbau und die Funktionsweise der hier dargestellten Spannzangeneinrichtung 92 ist ebenfalls aus der Darstellung unmittelbar ersichtlich.

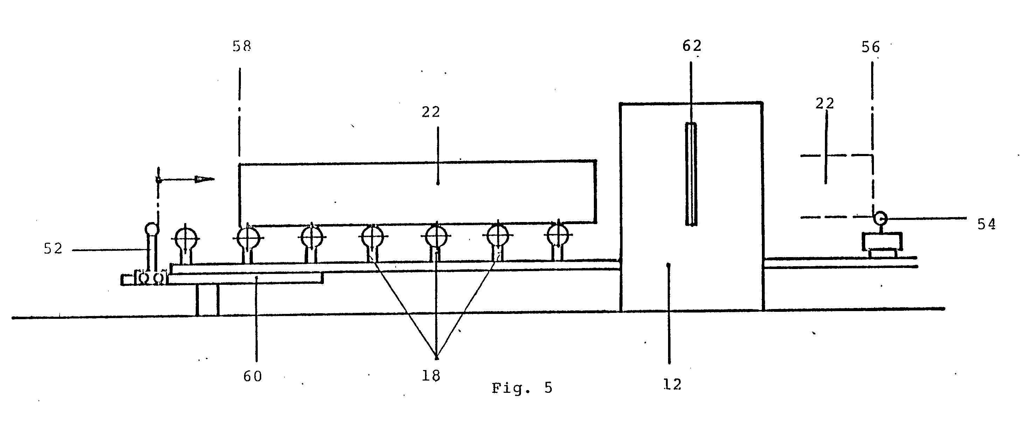

Fig. 5 zeigt im Querschnitt den Teil der Abbundanlage mit der Kreissägeneinrichtung 12. Zwei Meßtaster 52 und 54 sind im Bereich der Kreissägeneinrichtung 12 angeordnet, wobei ein Meßtaster 54 in Richtung der Zuführung des Werkstückes 22 zur Kreissägeneinrichtung 12 hinter dem Sägeblatt 62 ortsfest und der andere Meßtaster 52 vor der Kreissägeneinrichtung 12 auf einer Führungsschiene 60 angeordnet ist, die in Richtung der Förderbahn 18 längs verschieblich ist. Die Meßtaster 52 und 54 sind Teile einer Längenmeßeinrichtung. Ein zu bearbeitendes Werkstück 22 wird mit seiner in Förderrichtung vorderen Stirnseite 56 gegen den vorderen Meßtaster 54 zur Anlage gebracht und der längsverschiebliche Meßtaster 54 wird so weit herangeschoben, bis er an der hinteren Stirnseite 58 des Werkstückes zur Anlage kommt. Hierdurch ist es auf einfache Weise möglich, entweder unmittelbar nach Ausführung eines ersten Schnittes am Werkstück im Bereich von dessen vorderen Stirnfläche oder aber auch ohne Ausführung eines solchen Schnittes dessen Länge und dessen Längsposition in Bezug auf die Förderbahn 18 und die Vorschubeinrichtung 20 genau zu bestimmen bzw. festzulegen.

Die Meßtaster 52 und 54 können als mechanische, elektrische oder optische Endschalter ausgebildet sein.

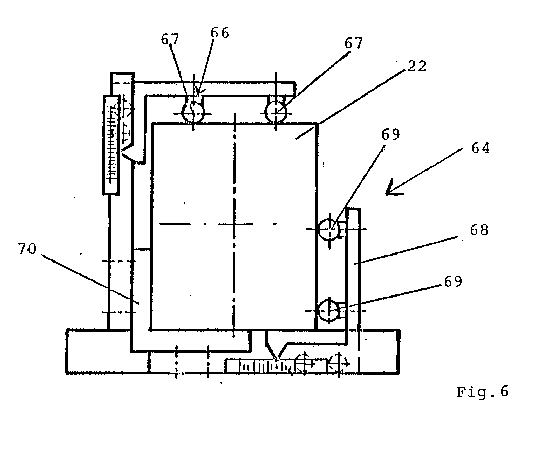

Fig. 6 zeigt eine Querschnittsmeßeinrichtung 64, mit welcher die Querschnittsmaße eines zu bearbeitenden Werkstückes 22 einfach und schnell bestimmt werden können. Die Querschnittsmeßeinrichtung 64 umfaßt einen ersten Meßschlitten 66, der vertikal zur Förderbahn 18 verfahrbar ist und einen zweiten Meßschlitten 68, der horizontal quer zur Förderbahn 18 relativ zu einem auf der gegenüber liegenden Seite der Förderbahn 18 angeordneten festen Meßanschlag 70 verschiebbar ist. Jeder Meßschlitten 66 bzw. 68 umfaßt zu den Längs-Mittelebenen des Werkstückes 22 parallel versetzte Meßfühler 67 bzw. 69, die als Tastrollen ausgebildet sein können, die entlang der Oberfläche des Werkstückes 22 abrollen.

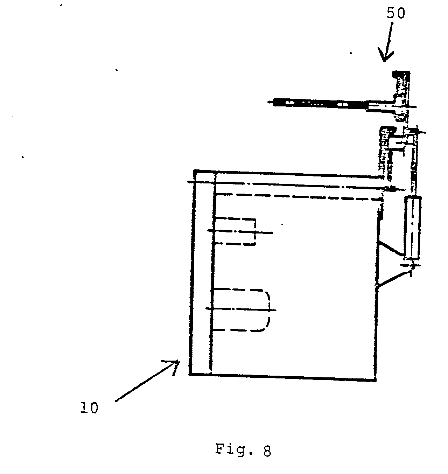

Fig. 8 zeigt eine Universalfräseinrichtung 14 schematisch im Längsschnitt. Übereinander angeordnete Maschinenteile der Universalfräseinrichtung 14 sind entlang den drei Koordinaten X, Y und Z eines kartesischen Koordinatensystems verschieblich. So ist gemäß der Darstellung die gesamte Universalfräseinrichtung 14 in Bodennähe entlang der X-Koordinate verschieblich, die sich parallel zur Förderbahn 18 erstreckt. Sie weist weiterhin eine Tragsäule auf, auf der der obere Maschinenteil in Richtung der Z-Koordinate aufwärts und abwärts verschoben werden kann. Der den Werkzeugteil tragende obere Teil der Universalfräseinrichtung 14 ist seinerseits entlang der Y-Koordinate verschieblich, die sich parallel zu den Rollen der Rollenbahn 18 erstreckt. Der Werkzeugteil selber ist mit zwei aufeinander senkrecht stehenden Drehachsen $\alpha$ und $\beta$ ausgebildet, von denen sich die Drehachse $\alpha$ zur Förderbahn 18 erstreckt. Die Ausbildung der Universalfräseinrichtung 14 mit den vorstehend geschilderten fünf Bewegungsachsen ermöglich die Ausführung räumlicher Schnitte an den zu bearbeitenden Werkstükken.

Fig. 8 zeigt schließlich rein schematisch eine Hobeleinrichtung 10, die in der Ebene der Förderbahn 18 an einem zu bearbeitenden Werkstück 22 nur von einer Seite aus angreift. Auf der gegenüber liegenden Seite eines zu bearbeitenden Werkstückes greift eine Anpreßeinrichtung 50 an, die mittels einer längenverstellbaren Antriebseinrichtung höhenverstellbar ist. Außerdem ist die Anpreßeinrichtung 50 mit einem Schwenkgelenk ausgebildet, um welches sie aus ihrer arretierbaren Betriebsstellung heraus vom Werkstück wegschwenkbar ist.

Bei der Bearbeitung eines Werkstückes 22 auf der in Fig. 1 schematisch dargestellten Abbundanlage mit den in den übrigen Fig. dargestellten und vorstehend im einzelnen erläuterten Bearbeitungsaggregaten kann so vorgegangen werden, daß ein von der Balkenaufgabeeinrichtung 72 auf die Förderbahn aufgebrachtes Werkstück 22 zunächst, falls erforderlich, mit den beiden Wendeeinheiten 26 in die zu Beginn vorgesehene Lage gebracht wird. Das Werkstück 22 kann dann mittels in der Förderbahn 18 vorgesehener angetriebener Förderrollen und/oder der Vorschubeinrichtung 20, die oberhalb der Förderbahn 18 parallel geführt ist, zu den einzelnen Bearbeitungsaggregaten geführt werden. So kann ein Werkstück 22 von der Vorschubeinrichtung 20 zunächst zur Hobeleinrichtung 10 geführt werden, um eine der vier Längsseiten zu bearbeiten. Zur Bearbeitung der übrigen Längsseiten kann das Werkstück 22 dann zwischen den Wendeeinheiten 26 und der Hobeleinrichtung 10 hin- und hergeführt werden. Nachfolgend kann das Werkstück 22 von der Vorschubeinrichtung 22 zur Kreissägeeinrichtung 12 geführt werden, wo an der Stirnseite des Werkstückes 22 ein die Position der Stirnseite festlegender Schnitt ausgeführt werden kann. Nachfolgend kann das Werkstück 22 mit seiner vorderen Stirnseite 56' am vorderen Meßtaster 54 zur Anlage gebracht werden, während nachfolgend der hintere Meßtaster 52 an der hinteren Stirnseite 58 zur Anlage gebracht wird. Wenn nun die Vorschubeinrichtung an dem Werkstück 22 fest angreift, beispielsweise durch Einfahren eines Führungsdornes, kann das Werkstück 22 auf der Förderbahn 18 entlang allen weiteren Bearbeitungsaggregaten positionsgenau geführt werden.

Wenn die Abbundanlage außerdem die in Fig. 6 dargestellte Querschnittsmeßeinrichtung 64 aufweist kann jedes Werkstück 22 in Abhängigkeit von seinen festgestellten Querschnittsmaßen entlang jedem Bearbeitungsaggregat so geführt werden, daß die Bearbeitungen maßgenau nicht nur in Bezug auf die Längsabmessung des Werkstückes 22 sondern auch in Bezug auf dessen beiden Hauptlängsebenen ausgeführt werden. Hierzu wird jedes Bearbeitungsaggregat in Abhängigkeit von den festgestellten Querschnittsmaßen quer zur Förderbahn 18 verschoben und/oder das Werkstück mittels Anschlägen quer zur Längsachse der Förderbahn bewegt. Hierdurch ist es möglich, bei allen Werkstükken 22, die sich in ihren Querschnittsmaßen innerhalb vorgegebener Grenzwerte unterscheiden, die vorzunehmenden Bearbeitungen in Bezug auf die Hauptlängsebenen des Werkstückes genau auszurichten, z.B. Zapfen, Nuten oder dergleichen immer mittig anzuordnen.

Die erfindungsgemäß vorgesehenen Wendeeinheiten 26, 80 bzw. 90 machen es u.a. möglich, Bearbeitungsaggregate einzusetzen, die nur einseitig an den Werkstücken angreifen. Denn die Werkstücke können mit den Wendeeinheiten auf einfache Weise positionsgenau sowohl bezüglich ihrer Längsposition als auch bezüglich ihrer Querschnittsabmessungen jeweils um 90° gewendet werden, so daß eine Bearbeitung mehrerer Seiten mit solchen Aggregaten ohne weiteres möglich ist. Einseitig an Werkstücken angreifende Bearbeitungsaggregate sind häufig wesentlich kostengünstiger als mehrseitig angreifende Aggregate. So ist eine einseitig angreifende Hobeleinrichtung wesentlich kostengünstiger herzustellen als eine mehrseitig angreifende Hobeleinrichtung. 10 Hobeleinrichtung

12 Kreissägeneinrichtung
14 Universalfräseinrichtung
16 Bohreinrichtung
18 Förderbahn
20 Vorschubeinrichtung
22 Werkstück
26 Wendeeinheit
28 1. Hauptlenker
30 2. Hauptlenker
32 Zangengelenk
34 Greifzange
36 Verbindungslenker
38 1. längenverstellbarer Antriebslenker
40 2. längenverstellbarer Antriebslenker
42 Gelenkverbindung
43 längenverstellbare Klemmeinrichtung
44 Hebelarm
46 Hebelarm
48 längenverschiebliche Schwenkeinrichtung
50 Anpreßeinrichtung
52 Meßtaster
54 Meßtaster
56 Stirnseite des Werkstückes
58 Stirnseite
60 Laufschiene
62 Sägeblatt
64 Querschnittsmeßeinrichtung
66 Meßschlitten
67 Meßfühler
68 Meßschlitten
69 Meßfühler
70 Meßanschlag
72 Balkenaufgabeeinrichtung
74 Balkenentnahmeeinrichtung
80 Wende-Greifeinrichtung
82 kreisbogenförmige Spannzangeneinrichtung
84 Zahnstangensegment
86 Ritzelantrieb
87 Stützgestell
88 Rollenführung
90 Wende-Greifeinrichtung
92 Spannzangeneinrichtung

94 Schlitzführung
96 Stütze

## Ansprüche

1. Zimmerei-Abbundanlage mit wenigstens einem Bearbeitungsaggregat (10, 12, 14, 16), einer Förderbahn (18) und einer Vorschubeinrichtung (18, 20) zum Fördern eines zu bearbeitenden Bauholz-Werkstückes (22), dadurch **gekennzeichnet,** daß eine Steuereinrichtung für die Vorschubeinrichtung (20) vorgesehen ist, mit der das Werkstück (22) auf der Förderbahn (18) zu und zur genauen Positionierung nach Maßgabe der Längsposition der an dem Werkstück (22) vorzunehmenden Bearbeitung entlang dem Bearbeitungsaggregat (10, 12, 14, 16) hin und her bewegbar ist.

2. Abbundanlage nach einem der vorhergehenden Ansprüche, dadurch **gekennzeichnet,** daß eine Wendevorrichtung (26, 26) vorgesehen ist, mit der das Werkstück (22) von der Förderbahn (18) abgehoben, um 90° um die Längsachse gedreht unter Wahrung zumindest der Längsposition wieder abgelegt werden kann.

3. Abbundanlage nach Anspruch 2, dadurch **gekennzeichnet,** daß die Wendevorrichtung wenigstens eine schwenkbare Greifeinrichtung umfaßt, mit der das Werkstück um das Maß seiner Breite parallel zur Förderbahn verschieblich und um seine zur Förderbahnseite liegende Kante kippbar ist.

4. Abbundanlage nach Anspruch 2, dadurch **gekennzeichnet,** daß die Wendevorrichtung wenigstens eine Wende-Greifeinrichtung (80, 90) mit einer Spannzangeneinrichtung (82, 92) umfaßt, die mit einem kreisbogenförmigen Führungssegment (84, 94) zum Verschwenken der Spannzangeneinrichtung (82, 92) von der Horizontalen in die Vertikale um 90° zusammenwirkt, und daß die Spannzangeneinrichtung (82, 92) mit eingespanntem Werkstück (22) in der horizontalen Lage um wenigstend die Hälfte der Breite von diesem (22) seitlich zum Führungssegment (84, 94) hin verfahrbar ist.

5. Abbundanlage nach einem der vorhergehenden Ansprüche, dadurch **gekennzeichnet,** daß eine einseitig aus der Ebene der Förderbahn (18) am Werkstück (22) angreifende Hobeleinrichtung (10) als Bearbeitungsaggregat vorgesehen ist, die eine auf der Oberseite eines Werkstückes (22) angreifende, höhenverstellbare Anpreßeinrichtung (50) aufweist, und die Anpreßeinrichtung (50) aus ihrer arretierbaren Betriebsstellung vom Werkstück (22) weg schwenkbar ist.

6. Abbundanlage nach einem der vorhergehenden Ansprüche, dadurch **gekennzeichnet,** daß eine Längenmeßeinrichtung (52, 54) vorgesehen ist, die zwei in Längsrichtung der Förderbahn (18) relativ zueinander verschiebliche Meßtaster (52, 54) aufweist, die die Lage der Stirnseiten (56, 58) eines Werkstückes (22) abtasten.

7. Abbundanlage nach einem der vorhergehenden Ansprüche, dadurch **gekennzeichnet,** daß eine Querschnittsmeßeinrichtung (64) vorgesehen ist, die einen ersten (66), vertikal zur Förderbahn (18) und wenigstens einen zweiten (68) horizontal quer zur Förderbahn (18) verschieblichen Meßschlitten (66, 68) aufweist.

8. Abbundanlage nach Anspruch 7, dadurch **gezeichnet,** daß die Steuereinrichtung für eine Relativverschiebung zwischen einem Werkstück (22) und einem Bearbeitungsaggregat (10, 12, 14, 16) quer zur Förderbahn (18) in Abhängigkeit von den Querschnittsmaßen des zu bearbeitenden Werkstückes (22) ausgelegt ist.

9. Abbundanlage nach einem der vorhergehenden Ansprüche, dadurch **gekennzeichnet,** daß eine Universalfräseinrichtung (14) vorgesehen ist, die zur Ausführung räumlicher Schnitte mit fünf Bewegungsachsen (X, Y, Z, $\alpha$, $\beta$) ausgebildet ist, von denen drei (X, Y, Z) sich entlang der Koordinaten eines kartesischen Koordinatensystems erstrecken und die beiden anderen ($\alpha$, $\beta$) aufeinander senkrecht stehende Drehachsen sind, und daß für jede Bewegungsachse ein getrennt ansteuerbarer Antrieb vorgesehen ist.

10. Abbundanlage nach einem der vorhergehenden Ansprüche und Anspruch 2, dadurch **gekennzeichnet,** daß die Wendevorrichtung (26) als ein Gelenkvieleck ausgebildet ist.

11. Abbundanlage nach Anspruch 10, dadurch **gekennzeichnet,** daß die Wendevorrichtung (26, 26) zwei in Längsrichtung der Förderbahn mit Abstand voneinander angeordnete, gleichzeitig am Werkstück angreifende Wendeeinheiten (26) umfaßt.

12. Abbundanlage nach Anspruch 10, dadurch **gekennzeichnet,** daß ein erster Hauptlenker (28), der mit dem Standgestell fest verbunden ausgebildet ist, und ein gegenüber liegender, zweiter Hauptlenker (30), der an einem freien Ende das Zangengelenk (32) einer Greifzange (34) trägt, jeweils an einem Verbindungslenker (36) angelenkt und über diesen mit Abstand voneinander gekoppelt sind.

13. Abbundanlage nach Anspruch 12, dadurch **gekennzeichnet,** daß ein erster längenverstellbarer Antriebslenker (38) endseitig an jeden Hauptlenker (28, 30) angelenkt ist und daß ein zweiter längenverstell barer Antriebslenker (40) einerseits an dem Verbindungslenker (36) und andererseits an einem (28) der Hauptlenker (28, 30) mit Abstand von dessen Gelenkverbindung (42) mit dem Verbindungslenker (36) angelenkt ist.

14. Abbundanlage nach Anspruch 12 oder 13, dadurch **gekennzeichnet,** daß vier (30, 38, 40, 42) der Lenker nach Art eines Gelenkviereckes angeordnet sind, zu welchen von den Antriebslenkern (38, 40) oder dem Verbindungslenker (36) einer (36) diagonal ausgerichtet ist.

15. Abbundanlage nach Anspruch 14, dadurch **gekennzeichnet,** daß der diagonal angeordnete Lenker endseitig an gegenüber liegenden Gelenken des Gelenkvierecks angelenkt ist.

16. Abbundanlage nach Anspruch 12 oder 13, dadurch **gekennzeichnet,** daß der zweite Hauptlenker (30), der Verbindungslenker (36) und der erste Antriebslenker (38) ein Gelenkdreieck bilden, in welchem letzterer (38) zur Greifzange (34) hin angeordnet ist, und daß der zweite Antriebslenker (40) unterhalb der Mitte des Verbindungslenkers (36) angelenkt ist.

17. Abbundanlage nach Anspruch 11 oder 12, dadurch **gekennzeichnet,** daß zwei längenverstellbare Antriebslenker vorgesehen sind, die jeder an einem Ende an einem der Hauptlenker und am anderen Ende an einem Hebelarm des Verbindungslenkers angelenkt sind.

18. Abbundanlage nach einem der Ansprüche 10 bis 17, dadurch **gekennzeichnet,** daß eine längenverstellbare Klemmeinrichtung (43) zwischen den Hebelarmen (44, 46) der Greifzange (34) angeordnet und an jedem von diesen angelenkt ist und daß eine längenverstellbare Schwenkeinrichtung (48) parallel zum zweiten Hauptlenker (30) ausgerichtet und einerseits an diesem und andererseits an einem Hebelarm (44) der Greifzange (34) angelenkt ist.

19. Abbundanlage nach einem der vorhergehenden Ansprüche, dadurch **gekennzeichnet,** daß die Vorschubeinrichtung (18, 20) eine Rollenbahn (18) mit angetriebenen Rollen umfaßt, deren Antrieb über die Steuereinrichtung erfolgt.

20. Abbundanlage nach einem der vorhergehenden Ansprüche, dadurch **gekennzeichnet,** daß die Vorschubeinrichtung (18, 20) eine entlang der Förderbahn (18) angetriebene, höhenverstellbare, an dem Balken fixierbare Greifeinrichtung (20) aufweist.

21. Abbundanlage nach einem der vorhergehenden Ansprüche, dadurch **gekennzeichnet,** daß mehrere Bearbeitungsaggregate wie Hobel- (10), Bohr- (16), Fräs-(14) und/oder Sägeeinrichtung (12) entlang der Förderbahn (18) hintereinander angeordnet sind.

22. Abbundanlage nach Anspruch 4, dadurch **gekennzeichnet,** daß die Spannzangeneinrichtung (82) mit dem als Zahnstangensegment (84) ausgebildeten Führungssegment fest verbunden ist und daß das Zahnstangensegment (84) mittels Ritzelantrieb (86) auf einer Kreisbahn um 90° verschwenkbar ist.

23. Abbundanlage nach Anspruch 4, dadurch **gekennzeichnet,** daß das Führungssegment eine von einer Stütze (96) getragene, kreisbogenförmige Schlitzführung (94) ist, in der die Spannzangeneinrichtung (92) radial ausgerichtet geführt angetrieben ist.

24. Abbundanlage nach Anspruch 6, dadurch **gekennzeichnet,** daß nur einer (52) der Meßtaster (52, 54) längs verschieblich (60) angeordnet ist.

25. Abbundanlage nach Anspruch 6 oder 7, dadurch **gekennzeichnet,** daß die Meßtaster (52, 54) beiderseits eines Sägeblattes (62) einer Kreissägeneinrichtung (12) angeordnet sind.

26. Abbundanlage nach Anspruch 25, dadurch **gekennzeichnet,** daß der in Richtung der Zuführung des Werkstückes (22) zur Kreissägeneinrichtung (12) hinter dem Sägeblatt (62) liegende Meßtaster (54) ortsfest angeordnet ist.

27. Abbundanlage nach einem der Ansprüche 6 oder 20 bis 23, dadurch **gekennzeichnet,** daß die Meßtaster (52, 54) als elektrische Endschalter ausgebildet sind.

28. Abbundanlage nach Anspruch 7 oder 8, dadurch **gekennzeichnet,** daß der zweite Meßschlitten (68) mit einem auf der gegenüberliegenden Seite der Förderbahn (18) angeordneten Meßanschlag (70) zusammenwirkt.

29. Abbundanlage nach Anspruch 8, dadurch **gekennzeichnet,** daß quer zur Förderbahn (18) verschiebliche Anschläge für das Werkstück (22) vorgesehen sind und/oder daß Bearbeitungsaggregat (10, 12, 14, 16) quer verschieblich ist.

Fig. 1

Fig. 2a

Fig. 2b

Fig. 3

Fig. 4a                              Fig. 4b

Fig. 5

Fig. 6

Fig. 7

Fig. 8